# NEUE EUROPÄISCHE PATENTSCHRIFT

(11) **EP 2 415 895 B2**
(45) Veröffentlichungstag und Bekanntmachung des Hinweises auf die Entscheidung über den Einspruch: **31.07.2019**
(45) Hinweis auf die Patenterteilung: 13.04.2016
(21) Anmeldenummer: 10008039.9
(22) Anmeldetag: 02.08.2010
(51) Int. Cl.: B21D 22/00, B21D 22/02, B21D 35/00, B60R 13/02, C21D 8/04, C21D 9/46, C22C 21/06, C22F 1/047

(54) **Verfahren zur Herstellung eines Blechformteils für Kraftfahrzeuge**
Method for the production of a metal moulded part for motor vehicle
Méthode pour la production d'une pièce de formage en tôle pour véhicule automobile

(43) Veröffentlichungstag der Anmeldung: 08.02.2012
(73) Patentinhaber: Benteler Automobiltechnik GmbH, 33104 Paderborn (DE)
(72) Erfinder: Diersmann, Holger, D-49492 Westernkappeln (DE); Dörr, Jochen, D-33014 Bad-Driburg (DE); Grewe, Jochem, D-33154 Salzkotten (DE); Hitz, Andreas, D-59597 Erwitte (DE)
(74) Vertreter: Ksoll, Peter

(56) Entgegenhaltungen:
- EP-A1- 1 748 088
- DE-A1- 2 950 379
- DE-A1-102009 008 282
- DE-T2-602004 009 545
- JP-A- 2009 012 041
- US-A- 4 324 596

## Beschreibung

Die Erfindung betrifft ein Verfahren zur Herstellung eines Kraftfahrzeugblechbauteils aus einer nicht aushärtbaren Aluminiumlegierung.

Es ist bekannt, hochbeanspruchte Fahrzeugkomponenten aus Aluminiumblechen herzustellen, wobei primär aushärtbare Legierungen eingesetzt werden. Der übliche Produktionsweg ist dabei das Vorformen des Aluminiumblechs geringerer Festigkeit mit anschließender Auslagerung zur Erzielung einer erhöhten Festigkeit.

Bei denjenigen Aluminiumlegierungen, bei denen keine Härtesteigerung durch eine Wärmebehandlung (Kalt- oder Warmauslagerung) erzielbar ist, kann eine Erhöhung der Festigkeit nur über die Umformung erreicht werden. Um auch aus Blechen dieser Legierungen komplexe Geometrien erstellen zu können, werden diese im Regelfall ebenso wie die aushärtbaren Legierungen in einem weichen Zustand umgeformt. Das heißt, dass diese nicht aushärtbaren Aluminiumlegierungen beispielsweise zuvor weichgeglüht werden.

Von Nachteil ist, dass Pressteile, die durch Umformen dieser weichgeglühten, nicht aushärtbaren Aluminiumbleche hergestellt werden, nur in Bereichen hoher Umformgrade eine deutliche Festigkeitssteigerung erfahren, mit der Folge, dass das Leichtbaupotenzial mit Formteilen aus den wirtschaftlich günstigen, nicht aushärtbaren Aluminiumlegierungen relativ gering ist. Das ist auch der Grund dafür, dass nicht aushärtbare Aluminiumlegierungen überwiegend im Fahrwerksbereich als dickwandige Bauteile zum Einsatz kommen. Nicht aushärtbare Aluminiumlegierungen zeichnen sich zumeist durch sehr gute Korrosionsbeständigkeit aus. Zudem kommen sie oft bei nicht hochbeanspruchten Bauteilen zum Einsatz, allerdings ohne den Fokus auf besonderen Leichtbau zu richten.

Um die aktuellen und zukünftigen Anforderungen an die Gewichtsoptimierung von Fahrzeugen zu erfüllen, muss versucht werden, bei allen Bauteilen Gewicht zu sparen. Dies betrifft auch Bauteile aus nicht aushärtbaren Aluminiumlegierungen. Diese Aluminiumlegierungen sind als Bleche höherer und hoher Festigkeit verfügbar, die durch Kaltwalzen oder durch Kaltwalzen mit gezielter Rückglühung hergestellt werden. Aus diesen im Handel erhältlichen Halbzeugen lassen sich jedoch bisher keine komplexen Bauteile herstellen, obwohl dies auf Grund der möglichen Gewichtsreduktion und der Materialersparnis wirtschaftlich interessant wäre.

Die JP 2009 012041 A offenbart ein Blechformteil aus einer Aluminium-Magnesium-Legierung in einem Werkstoffzustand H1x oder H2x. Die Herstellung erfolgt aus einem Blechzuschnitt, der innerhalb von 2 bis 30 Sekunden auf 230° bis 350° C erwärmt und umgeformt und wieder aus dem Werkzeug genommen wird.

Durch die DE 60 2004 009 545 T2 zählt ebenfalls ein Blechformteil zum Stand der Technik aus einer Aluminium-Magnesium-Legierung im Zustand H1x oder H2x, zu dessen Herstellung ein Blechzuschnitt in weniger als 10 Sekunden auf 150° bis 350° C gebracht und umgeformt wird. Die Umformung erfolgt in einem zumindest teilweise erwärmten Werkzeug und unter Anwesenheit eines mit den späteren Arbeitsgängen kompatiblen Schmiermittels.

Der Erfindung liegt die Aufgabe zu Grunde, ein Verfahren zur Herstellung eines qualitativ hochwertigen Kraftfahrzeugblechformteils aus einer Aluminiumlegierungen aufzuzeigen mit verbesserten Bauteileigenschaften, welches insbesondere eine hohe Festigkeit besitzt und/oder eine höhere Duktilität bei gleicher Festigkeit.

Die Lösung dieser Aufgabe besteht in einem Kraftfahrzeugblechformteil gemäß Anspruch 1.

Das Kraftfahrzeugblechformteil ist gemäß einem erfindungsgemäßen Verfahren hergestellt aus einer nicht aushärtbaren Aluminiumlegierung, welches sich gemäß der europäischen Norm EN 515:1993 im Werkstoffzustand H16, H18, H19, H22, H24, H26, H28, H32, H34, H36 oder H38 befindet und als Legierungskomponente neben Aluminium zumindest Magnesium und gegebenenfalls Mangan enthält. Das Kraftfahrzeugblechformteil ist warmformtechnisch hergestellt, wobei das Ausgangsblech zumindest partiell erwärmt und anschließend zum Kraftfahrzeugblechformteil umgeformt ist. Zumindest lokal weist das Kraftfahrzeugblechformteil Umformgrade auf, die oberhalb der Grenzformänderungskurve der Aluminiumlegierung bzw. des Ausgangsblechs bei Raumtemperatur liegen.

Die Grenzformänderungskurve ist ein wichtiger Parameter für die Umformung. Jedes Material hat seine individuelle Grenzformänderungskurve, die gewöhnlich nach Nakajima oder Marciniak mit Hilfe von Tiefungsversuchen an Blechproben ermittelt wird. Die Grenzformänderungskurve beschreibt die maximale Formbarkeit eines Materials. Überschreiten die Umformgrade die Umformgrenzwerte und liegen oberhalb der Grenzformänderungskurve, können an diesen kritischen Stellen lokale Einschnürungen oder Risse im Bauteil auftreten. Infolge überdehnter Bereiche mit unzulässiger Materialdickenabnahme ist eine Bauteilsichheit nicht garantiert.

Erfindungsgemäß werden Kraftfahrzeugblechformteile hergestellt aus Blechen aus walzharten Aluminiumlegierungen, die konventionell nicht herstellbar sind. Ein erfindungsgemäßes Kraftfahrzeugblechformteil weist zumindest lokal Umformgrade auf, die aus dem Ausgangsmaterial bei Raumtemperatur nicht herstellbar sind bzw. bei dem konventionell hergestellt zumindest lokal Kombinationen von Haupt- und Nebenformänderungen auftreten, die das Material im kalten Zustand bzw. bei Raumtemperatur nicht rissfrei ertragen könnte. Konventionell hergestellt würde das Formänderungsvermögen des Materials bei Raumtemperatur bei der Umformung überschritten und es würde zum Versagen durch Risse kommen. Solche Risse treten beim erfindungsgemäßen Kraftfahrzeugblechformteil nicht auf.

Das erfindungsgemäß hergestellte Kraftfahrzeugblechformteil besteht aus einer nicht aushärtbaren Aluminiumlegierung bzw. aus einem Blech aus einer solchen Aluminiumlegierung. Dieses Blech ist umformtechnisch zu einem komplexen dreidimensionale Kraftfahrzeugblechformteil umgeformt worden. Die hierbei zumindest lokal vorgenommenen Umformgrade sind der Gestalt, dass das Bauteil kalt, beispielsweise aus einem Blech im Zustand H111 gemäß Norm EN 515, nicht herstellbar ist. Erst die im Rahmen der Erfindung vorgenommene Warmumformung ermöglicht die Herstellung des erfindungsgemäßen Kraftfahrzeugblechformteils, welches qualitativ hochwertig ist, ohne Materialfehler bzw. -schwächungen mit einer hohen Festigkeit bzw. einer höheren Duktilität bei gleicher Festigkeit als konventionell hergestellte Kraftfahrzeugblechformteile aus Aluminiumlegierungen.

Bei der Blechumformung hat sich für die Beschreibung der Umformbarkeit - wie bereits vorstehend ausgeführt - die so genannte Grenzformänderungskurve (auch Grenzformänderungsdiagramm genannt) durchgesetzt. Die Grenzformänderungskurve beschreibt die Versagensgrenze bei unterschiedlichen Deformations- und Spannungszuständen. In einer Grenzformänderungskurve ist spezifisch für den jeweiligen Werkstoff für unterschiedliche Beanspruchungszustände das Versagen durch Einschnürung bzw. das Auftreten von Reißern dargestellt. Diese Orte des Versagens werden in verschiedenen Tests ermittelt und dann für die unterschiedlichen Werkstoffe die Grenzformänderungskurve erstellt, indem der Hauptumformgrad ϕ1 über den Nebenumformgrad ϕ2 eingetragen ist.

Die Grenzformänderungskurve bietet die Möglichkeit, die Verfahrensgrenzen bei der Umformung von Blechwerkstoffen zu bestimmen und dient somit der Beurteilung der Umformeigenschaften von Blechen. Grundsätzlich gilt, dass der Abstand der an einem umgeformten Bauteil gemessenen Formänderung zur Grenzformänderungskurve ein Maß der Sicherheit bei der Herstellung von Ziehteilen ist. Mit Hilfe der Formänderungsanalyse und dem Vergleich mit der Grenzformänderungskurve erfolgt folglich eine sichere Beurteilung des Umformprozesses von Blechen. Durch die Grenzformänderungskurve wird die Qualität des Materials anschaulich definiert und so dem Anwender die Wahl des richtigen Werkstoffs erleichtert. Hier setzt die Erfindung an. Im Rahmen der Erfindung wurde erkannt, dass ein Kraftfahrzeugblechformteil aus einer Aluminiumlegierung der beanspruchten Art hergestellt werden kann zur Herstellung von Bauteilen mit hoher Festigkeit und/oder Duktilität, wobei dieses Kraftfahrzeugblechformteil Umformgrade aufweist, die sich konventionell nicht realisieren lassen. Folglich charakterisiert sich das erfindungsgemäße Kraftfahrzeugblechformteil dadurch, dass es zumindest lokal Umformgrade aufweist, die oberhalb der Grenzformänderungskurve der Aluminiumlegierung bzw. des aus dieser Aluminiumlegierung bestehenden Ausgangsblechs bei Raumtemperatur liegen.

Bei einem erfindungsgemäßen Kraftfahrzeugblechformteil ist die Dehngrenze R_{p0,2} gegenüber dem Ausgangsblech um maximal 30 % reduziert (Anspruch 2). Des Weiteren weist das Kraftfahrzeugblechformteil eine Dehngrenze R_{p0,2} auf, die mindestens 20 % höher ist als die Dehngrenze eines vergleichbaren Kraftfahrzeugblechformteils, welches aus einem Blech aus einer Aluminiumlegierung im Zustant O/H111 gemäß der europäischen Norm EN 515:1993 geformt ist (Anspruch 3). Der Zustand O bedeutet weich geglüht. Mit dem Zustand O können Erzeugnisse bezeichnet werden, bei denen die für den weich geglühten Zustand geforderten Eigenschaften durch Warmumformungsverfahren erzeilt werden.

Der Zustand H111 bedeutet geglüht und durch anschließende Arbeitsgänge, zum Beispiel Recken oder Richten, geringfügig kaltverfestigt (weniger als H11).

Wie erwähnt ist die Dehngrenze R_{p0,2} eines erfindungsgemäßen Kraftfahrzeugblechformteils gegenüber einem konventionell hergestellten Kraftfahrzeugblechformteil deutlich um mindestens 20 % gesteigert. Ein Kraftfahrzeugblechformteil aus einem 1 mm starken Blech, das konventionell eine Dehngrenze R_{p0,2} von 110 N/mm² hat, weist nunmehr eine Dehngrenze R_{p0,2} von 132 N/mm² oder höher auf. Bei einem Kraftfahrzeugblechformteil aus einem 1 mm bis 3 mm starken Blech ist konventionell eine Dehngrenze R_{p0,2} von 105 N/mm² gefordert. Ein erfindungsgemäßes Kraftfahrzeugblechformteil dieser Wandstärke besitzt eine Dehngrenze R_{p0,2} von mindestens 126 N/mm². Kraftfahrzeugblechformteile aus Blechen mit einer Wandstärke von größer 3 mm sollen konventionell eine Dehngrenze R_{p0,2} von 100 N/mm² aufweisen. Erfindungsgemäß besitzt ein Kraftfahrzeugblechformteil dieser Wandstärke und der anspruchsgemäßen Aluminiumlegierung eine Dehngrenze R_{p0,2} von mindestens 120 N/mm².

Das Verfahren zur Herstellung eines erfindungsgemäßen Kraftfahrzeugblechformteils kann wie folgt beschrieben werden:
Ein wesentlicher Schritt der Erfindung ist, dass der Temperaturbereich, auf den das Blech (Ausgangsblech) erwärmt wird, zwischen 200 °C und 400 °C, insbesondere kleiner als 370 °C, ist und die Erwärmung und presstechnische Herstellung des Bauteils innerhalb eines Zeitraums von 1 bis 60 Sekunden erfolgt, wonach das erwärmte Blech in ein Umformwerkzeug einer Umformpresse eingelegt und zum Blechformteil umgeformt wird.

Vorzugsweise erfolgt dann ein Abkühlen des Bleches auf eine Temperatur kleiner 200 °C innerhalb von 60 Sekunden nach der Erwärmung, vorzugsweise durch Umformen in einem Werkzeug, dessen Temperatur kleiner 200 °C bis 300 °C ist.

Das erwärmte Blech wird in ein kaltes Umformwerkzeug eingelegt, wobei unter einem kalten Umformwerkzeug ein unbeheiztes bzw. nicht fremdbeheiztes Umformwerkzeug zu verstehen ist.

Im Rahmen der Erfindung erfolgt vorzugsweise eine aktive Abkühlung des umgeformten Blechs. Grundsätzlich ist aber auch eine passive Abkühlung denkbar, bei der das Blech bzw. das geformte Blechformteil der Umformpresse entnommen und ohne zusätzliche Kühlungsmaßnahmen unter Umgebungsbedingungen abkühlt.

Mit den üblichen Erwärmungsmethoden auf Temperaturen um 300 °C geht ein Großteil der Festigkeit bei dem Erwärmen im Ofen verloren. Es wurde jedoch festgestellt, dass sowohl die Rekristallisation als auch die Erholung des Gefüges von einer Temperatur-Zeitschwelle abhängig sind. Daher ist vorgesehen, ein walzhartes, nicht aushärtbares Aluminiumblech welches sich gemäß der Europäischen Norm EN515:1993, deren Offenbarung hierin durch Bezugnahme aufgenommen ist, im Werkstoffzustand H16, H18, H19, H22, H24, H26, H28, H32, H34, H36 oder H38 befindet und als Legierungskomponente neben Aluminium zumindest Magnesium und gegebenenfalls Mangan enthält, mit einer extrem hohen Geschwindigkeit aufzuheizen und dann so schnell in einem kalten Umformwerkzeug umzuformen, dass ein Großteil der Festigkeit im gesamten Bauteil erhalten bleibt. Gemäß Anspruch 2 ist die Dehngrenze R_{p0,2} des hergestellten Kraftfahrzeugblechformteils gegenüber dem Ausgangsblech um maximal 30 % reduziert. Experimente haben gezeigt, dass es ab einer legierungsabhängigen Schwelle aus Temperatur und Haltezeit zu einem Steilabfall der Eigenschaften des wieder erkalteten Bauteils kommt, wobei insbesondere die Dehngrenze R_{p0,2} sehr zurückgeht. Dabei ist insbesondere die durch die Temperatur bedingte Grenze des Prozessfensters sehr schmal, aber auch die Haltezeit wird zunehmend kritischer, wenn man sich der Temperatur-Zeit-Schwelle nähert. Damit das Umformvermögen ausreichend groß ist, ist jedoch abhängig von der Bauteilgeometrie eine vergleichsweise hohe Temperatur von bis zu 300°C notwendig um die Formgebung zu erzielen, daraus kann, je nach Legierung ein vergleichsweise kleines Prozessfenster resultieren. Generell bringt das Herstellungsverfahren mit steigender Erwärmungs- und Haltezeit bei den umformtechnisch erforderlichen Temperaturen einen leichten Verlust an Festigkeit mit sich, so dass erfindungsgemäß möglichst kurze Gesamtzeiten auf Temperatur anzustreben sind. Da für das Handling nach der Erwärmung und dem Abpressen der Bleche bestimmte Taktzeiten technisch kaum, oder nur mit unwirtschaftlichem Aufwand, zu unterschreiten sind, bietet eine möglichst schnelle Erwärmung die besten Möglichkeiten Bauteile mit einer Festigkeit nahe der des Ausgangsbleches herzustellen. Hierzu muss das Blech auf eine Temperatur von mindestens 200 °C und höchstens 400 °C, vorzugsweise 250 °C bis 370 °C, insbesondere 270 °C bis 300 °C erwärmt werden. Die zugehörigen Aufheizzeiten für das erfindungsgemäße Verfahren liegen bei 1 bis 60 Sekunden, und damit deutlich unter denen die bei einer üblichen Ofenerwärmung auf die genannten Temperaturen möglich sind. Die Erwärmung kann deshalb vorzugsweise resistiv, konduktiv, induktiv oder kapazitiv erfolgen. Wobei der Erwärmungszeitraum, wie oben beschrieben, vorzugsweise kürzer ist und unter 45 Sekunden, insbesondere für Temperaturen oberhalb 250 °C unterhalb 30 Sekunden liegen sollte.

Vorzugsweise wird das Blech - wie ausgeführt - in einem Zeitraum von 1 bis 30 Sekunden erwärmt und in längstens 60 Sekunden geformt und zumindest lokal unter 260 °C abgekühlt.

Die Europäische Norm EN515 legt fest, wie Basiszustände von Aluminiumhalbzeugen zu bezeichnen sind. Der Buchstabe H bedeutet kaltverfestigt. Diese Bezeichnung gilt für Erzeugnisse, die zur Sicherstellung der festgelegten mechanischen Eigenschaften nach dem Weichglühen (oder nach dem Warmumformen) einer Kaltumformung oder einer Kombination aus Kaltumformung und Erholungsglühen bzw. Stabilisieren unterzogen werden. An den Buchstaben H schließen sich zwei Ziffern an, die erste zur Kennzeichnung der Art der thermischen Behandlung, die zweite zur Kennzeichnung des Grades der Kaltverfestigung.

Unter Kaltumformung wird die plastische Umformung eines Metalls bei einer Temperatur und Geschwindigkeit verstanden, die zu einer Kaltverfestigung führt. Kaltverfestigung ist die Veränderung des Metallgefüges durch Kaltumformung, die zu erhöhter Festigkeit und Härte führt, wobei die Formbarkeit abnimmt.

Die Zustandsbezeichnung H1x steht für nur kaltverfestigte Erzeugnisse, die zur Erzielung der gewünschten Festigkeit ohne zusätzliche thermische Behandlung kaltverfestigt werden.

Die Zustandsbezeichnung H2x bedeutet kaltverfestigt und rückgeglüht. Dies gilt für Erzeugnisse, die über die gewünschte Endfestigkeit hinaus kaltverfestigt und dann durch Rückglühen auf die gewünschte Festigkeit entfestigt werden.

Die Zustandsbezeichnung H3x bedeutet kaltverfestigt und stabilisiert und gilt für kaltverfestigte Erzeugnisse, deren mechanische Eigenschaften durch eine thermische Behandlung bei niedriger Temperatur oder durch eine während der Bearbeitung vorgenommene Erwärmung stabilisiert werden. Stabilisieren verbessert im Allgemeinen das Umformvermögen. Diese Bezeichnung gilt nur für Legierungen, die sich ohne Stabilisierung durch Lagerung bei Raumtemperatur entfestigen.

Die zweite Ziffer nach dem H gibt den endgültigen Grad der Kaltverfestigung an, der durch die Mindestwerte der Zugfestigkeit gekennzeichnet ist. Die Zahl 8 wird den härtesten Zuständen, die üblicherweise hergestellt werden, zugeordnet. Die Zahl 9 bezeichnet Zustände, deren Mindestzugfestigkeit um 10 MPa oder mehr über der Zustände H8x liegt. Die Zahlen 2, 4 und 6 bezeichnen Zwischenzustände. Dementsprechend bedeutet H12 kaltverfestigt-1/4 hart, H14 kaltverfestigt-1/2 hart, H16 kaltverfestigt-3/4 hart und H18 kaltverfestigt-4/4 hart (voll durchgehärtet). Dementsprechend sind bei den Zuständen H22/24/26/28 kaltverfestigte und rückgeglühte Werkstoffe kategorisiert bzw. bei Zustandsangaben H32/34/36/38 kaltverfestigte und stabilisierte Werkstoffe. Insgesamt sollen daher Bleche zum Einsatz kommen, die walzhart sind und somit eine Kaltverfestigung durch Walzen erfahren haben.

Der Vorteil der Erfindung ist, dass ein relativ komplexes Bauteil aus einer walzharten, nicht aushärtbaren Aluminiumlegierung herstellbar ist, das komplett oder in Teilbereichen eine hohe Festigkeit aufweist. Das Besondere ist, dass die Teilbereiche hoher Festigkeit nicht von der Umformung und den eingebrachten Umformgraden abhängig sind. Dadurch ergibt sich ein alternativer Fertigungsweg im Vergleich zu aushärtbaren Legierungen, die auf Grund deutlich höherer Halbzeugkosten und einer bis zu 24 Stunden andauernden Wärmebehandlung des Bauteils hohe Produktionskosten mit sich bringen.

Ein offenes Blechformteil im Sinne dieser Erfindung ist ein aus einer Blechplatine, also aus einem im Wesentlichen ebenen Ausgangszustand presstechnisch hergestelltes Bauteil. Das Ausgangsmaterial ist durch Abwalzen auf einen bestimmten Zielwert kaltverfestigt worden. Ein offenes Blechformteil im Sinne der Erfindung meint nicht Hohlprofil.

Im Rahmen der Erfindung soll das walzharte, nicht aushärtbare Aluminiumblech vorzugsweise vollständig erwärmt und umgeformt werden. Denkbar ist aber auch eine partielle Warmumformung, indem das Blech vor der Umformung bereichsweise auf unterschiedliche Temperaturen erwärmt wird. Es ist auch denkbar, dass das Blech Bereiche aufweist, die unterschiedlich lang erwärmt worden sind, sei es, um unterschiedliche Zieltemperaturen zu erreichen oder um durch die Erwärmungsdauer die lokalen Verformungseigenschaften des Blechs bzw. die Zielfestigkeiten zu beeinflussen.

Das Blech kann vorzugsweise resistiv, konduktiv, induktiv oder kapazitiv erwärmt werden.

Teile des Bleches bzw. des Blechformteils können nach der Umformung in einer Vorrichtung weiter auf Temperatur gehalten oder erhitzt werden.

Mit dem der Erfindung zugrunde liegenden Verfahren ist es auch möglich, Bauteile, die nur in bestimmten Bereichen eine hohe Festigkeit aufweisen sollen, zu schaffen, wobei die Bauteile in anderen Bereichen gezielt eine geringere Festigkeit besitzen können, bei gleichzeitig verbesserten Dehnwerten. Hierbei wird das Ziel verfolgt, ein im Allgemeinen gegenüber einem komplett harten Bauteil verbessertes Bauteil zu schaffen, das insbesondere hinsichtlich des Verformungsverhaltens bei einem Unfall günstigere Eigenschaften besitzt, sei es im Hinblick auf die Energieaufnahme oder im Hinblick auf die Gewichtsersparnis.

Im Rahmen der Erfindung ist es auch möglich, die bereichsweise unterschiedlich lange und hohe Erwärmung des Blechs während des Umformvorgangs fortzusetzen. Hierzu kann das Umformwerkzeug einen Formhohlraum aufweisen mit wenigstens einem Bereich, der beheizt wird. Alternativ oder zusätzlich zu beheizten Stellen im Werkzeug können auch gekühlte Bereiche vorgesehen sein.

Bei einer Mehrstufenumformung können auch in weiteren Werkzeugstufen Formhohlräume vorgesehen sein, die teilgeheizt sind. In gleicher Weise ist in einem auf die Umformung folgenden Prozessschritt eine zeitlich weitergehende oder höhere Erwärmung mittels eines partiell wirkenden Ofens oder eines Induktors möglich. Es wird allerdings als zweckmäßig angesehen, insbesondere die Variante höhere Erwärmungstemperatur vor der Umformung zu realisieren und nicht im Anschluss an die Umformung.

Automobilteile, die heute bevorzugt in aushärtbaren Legierungen gefertigt werden und künftig vorteilhaft durch erfindungsgemäße Kraftfahrzeugblechformteile ersetzt werden können, sind:
- A, B, C - Säulen
- Längsträger (Schweller, Mitteltunnel)
- Querträger ( Sitz- / Dach-)
- Crashboxen
- Bumper-Querträger
- Verstärkungsbleche allgemein
- Verstärkungsblech im Bodenbereich
- Stirnwandquerträger (oben, Mitte, unten)
- Fersenblechquerträger
- Türbrüstung
- Federbeindom

Automobilteile, die heute bevorzugt aus weichen nichtaushärtbaren Legierungen gefertigt werden und künftig vorteilhaft durch erfindungsgemäße Kraftfahrzeugblechformteile ersetzt werden können, sind:
- Türinnenbleche
- Schubfelder
- Bodenbleche
- Heckklappeninnenblech + Motorhaubeninnenblech
- Querträger ( Sitz- / Dach-)
- Verstärkungsbleche allgemein
- Verstärkungsblech im Bodenbereich
- Stirnwandquerträger (oben, Mitte, unten)
- Fersenblechquerträger
- Längsträger (Schweller, Mitteltunnel)

Crashversuche haben gezeigt, dass erfindungsgemäße bzw. erfindungsgemäß hergestellte Kraftfahrzeugblechformteile im Crash eine überraschend hohe Duktilität zeigen, das heißt, es sind große Deformationen der Bauteile möglich, ohne dass es zum Versagen durch Risse kommt. Außerdem konnte in Versuchen gezeigt werden, dass die Energieaufnahme im Crashfall bei gleicher Intrusion um 15 % höher liegt als bei Blechformteilen aus der gleichen Legierung, die jedoch nicht nach dem erfindungsgemäßen Verfahren hergestellt worden sind. Noch größer ist der Unterschied in der Energieaufnahme bis zum Beginn einer plastischen Deformation, bedingt durch den hohen R_{p0,2} Dies ist bedeutend für Bauteile, die hohe (Crash-)Kräfte weiterleiten sollen, ohne selbst plastisch zu deformieren (z. B. Bumper-Querträger).

## Patentansprüche

1. Verfahren zur Herstellung eines Kraftfahrzeugblechformteils hergestellt aus einem Blech aus einer nicht aushärtbaren Aluminiumlegierung, welches sich gemäß der Europäischen Norm EN515:1993 im Werkstoffzustand H16, H18, H19, H22, H24, H26, H28, H32, H34, H36 oder H38 befindet und als Legierungskomponente neben Aluminium zumindest Magnesium und gegebenenfalls Mangan enthält, wobei das Blech zumindest partiell erwärmt und zum Kraftfahrzeugblechformteil umgeformt wird , **dadurch gekennzeichnet, dass** das erwärmte Blech in einem kalten Umformwerkzeug umgeformt wird und das Kraftfahrzeugblechformteil zumindest lokal Umformgrade aufweist, die oberhalb der Grenzformänderungskurve der Aluminiumlegierung bei Raumtemperatur liegen und dass die Dehngrenze *R*_{*p*0,2} des Kraftfahrzeugblechformteils gegenüber dem Blech um maximal 30 % reduziert ist.

2. Verfahren nach Anspruch 1, **dadurch gekennzeichnet, dass** das Kraftfahrzeugblechformteil eine Dehngrenze R_{p0,2} aufweist, die mindestens 20 % höher ist, als die Dehngrenze eines vergleichbaren Kraftfahrzeugblechformteils, welches aus einem Blech aus einer Aluminiumlegierung im Zustand O/H111 gemäß Norm EN 515:1993 geformt ist.

## Claims

1. Method for the production of a sheet metal moulding for a motor vehicle, produced from a sheet of a non-precipitation-hardening aluminium alloy which is in material state H16, H18, H19, H22, H24, H26, H28, H32, H34, H36 or H38 according to European standard EN515:1993 and which contains in addition to aluminium, as alloy component, at least magnesium and optionally manganese, wherein the sheet metal is at least partially heated and shaped into the sheet metal moulding for a motor vehicle, **characterised in that** the heated sheet metal is shaped in a cold moulding tool and the sheet metal moulding has, at least in parts, degrees of deformation above the forming limit curve of the aluminium alloy at room temperature and that the yield strength R_{*p*0.2} of the sheet metal moulding is reduced by a maximum of 30% relative to the sheet metal.

2. Method according to claim 1, **characterised in that** the sheet metal moulding has a yield strength R_{*p*0.2} which is at least 20% higher than the yield strength of a comparable motor vehicle sheet metal moulding which has been shaped from a sheet of an aluminium alloy in the state O/H111 according to European standard EN515:1993.

## Revendications

1. Procédé de fabrication d'une pièce de formage en tôle pour véhicule automobile constituée d'une tôle formée d'un alliage d'aluminium non durcissable qui se trouve selon la norme européenne EN 515:1993 à l'état de matière première H16, H18, H19, H22, H24, H26, H28, H32, H34, H36 ou H38 et contient comme composants d'alliage en dehors de l'aluminium au moins du magnésium et éventuellement du manganèse, dans lequel la tôle est chauffée au moins en partie et est transformée en pièce de formage en tôle pour véhicule automobile, **caractérisé en ce que** la tôle chauffée est transformée dans un outil de transformation à froid et la pièce de formage en tôle pour véhicule automobile présente au moins des degrés de transformation locaux qui se situent au-dessus de la courbe limite de déformation de l'alliage d'aluminium à température ambiante et **en ce que** la limite élastique *R*_{*p*0,2} de la pièce de formage en tôle pour véhicule automobile est réduite vis-à-vis de la tôle au maximum de 30 %.

2. Procédé selon la revendication 1, **caractérisée en ce que** la pièce de formage en tôle pour véhicule automobile présente une limite élastique R_{p0,2}, qui est plus élevée d'au moins 20 % que la limite élastique d'une pièce de formage en tôle pour véhicule automobile comparable qui est formée d'une tôle d'un alliage d'aluminium à l'état O/H111 selon la norme EN 515:1993.
